# EUROPEAN PATENT SPECIFICATION

(11) **EP 1 013 543 B1**
(45) Date of publication and mention of the grant of the patent: **04.10.2001**
(21) Application number: 99125220.6
(22) Date of filing: 17.12.1999
(51) Int. Cl.: B62J 6/04, B60Q 1/26, F21K 7/00, F21V 5/00

(54) **Light emission device suitable for bicycle taillight**
Lichtemittierende Einrichtung für das Rücklicht eines Fahrrades
Dispositif émetteur de lumière pour feu arrière de bicyclette

(30) Priority: 24.12.1998 JP 36770298
(43) Date of publication of application: 28.06.2000
(73) Proprietor: CATEYE Co., Ltd., Osaka-shi, Osaka (JP)
(72) Inventor: Shoji, Masao, Minamikawachi-gun, Osaka 583-0992 (JP); Fujimoto, Takuya, Sakai-shi, Osaka 593-8302 (JP)
(74) Representative: Prüfer, Lutz H., Dipl.-Phys.

(56) References cited:
- EP-A- 0 940 331
- CH-A- 682 142
- DE-A- 4 224 061
- DE-A- 4 433 882
- US-A- 5 173 810

## Description

The present invention relates to a light emission device for a bicycle taillight, and to a bicycle taillight employing such a light emission device.

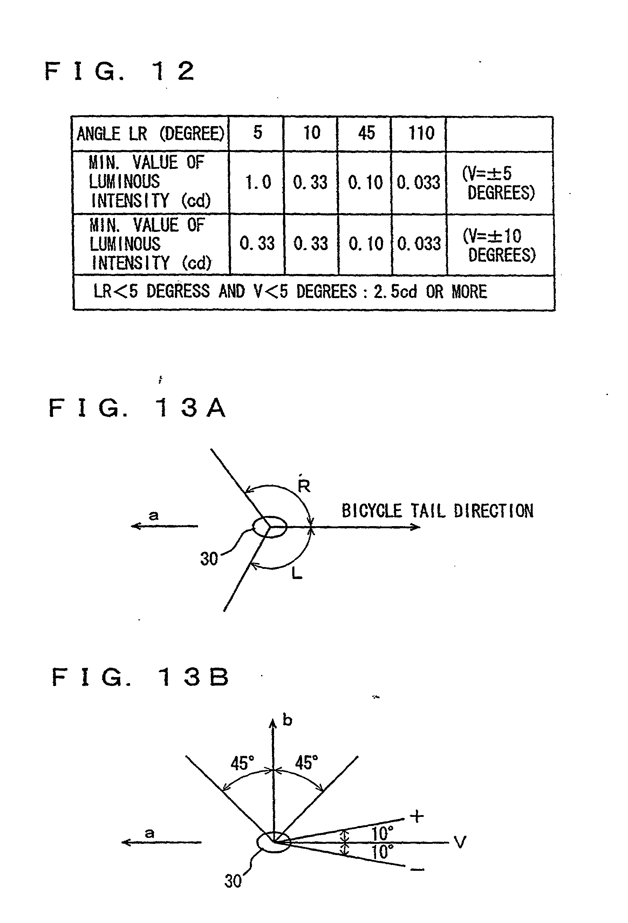

Conventionally, taillights for use with a bicycle is commercially available. The brightness of a bicycle taillight in every direction relating to the travel direction of bicycle is predetermined in order to ensure the safety of the bicycle ride at night. Fig. 12 is a table illustrating the regulation values (left and right (LR), and vertical (V) angles) in the tail direction of a bicycle taillight practiced in Germany, for instance. Figs. 13A and 13B are diagrams showing the range indicated by the left (L), right (R) and vertical (V) angles of the regulation values shown in Fig. 12.

Fig. 13A is a plan view of a bicycle taillight 30 seen directly from above, and the direction indicated by an arrow a is the direction of the bicycle travel. As seen in Fig. 13A, angles L and R respectively define the light distribution angles from the tail direction to the forward direction of the bicycle as shown in the diagram. In other words, the minimum luminous intensity should be 1.0 cd at a position where the angles L and R are at 5°, and 0.033 cd at a position where the angles are 110° (V=±5°).

Fig. 13B is a diagram of bicycle taillight 30 viewed from the side. As shown in Fig. 13B, bicycle taillight 30 is required to distribute light in the overhead direction (the direction indicated by b) in a conical manner at angles of 45° in the forward and backward directions, and toward the tail side (the direction opposite to the direction indicated by arrow a) at angles of 10° in the upward and downward directions, respectively. It has been required for a bicycle taillight to meet the conditions as those given above.

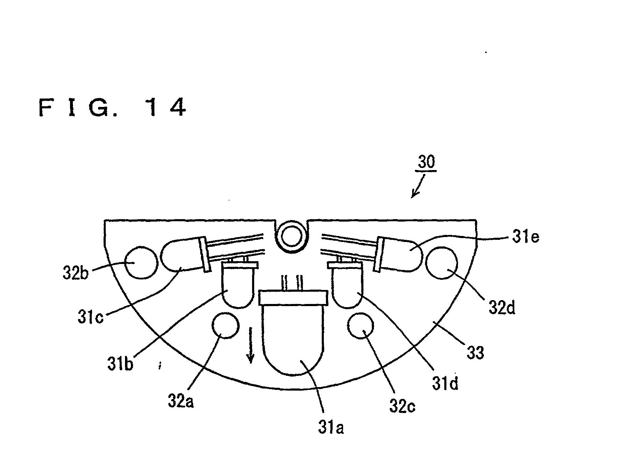

Fig. 14 is a schematic view showing an internal structure of a conventional bicycle taillight 30 that meets the regulation values set forth in Germany as described above. As seen in Fig. 14, the conventional bicycle tail light 30 includes a large LED 31a directed toward the rear direction of the bicycle (shown by an arrow in the diagram), two pairs of small LEDs 31b to 31e symmetrically provided on either side of LED 31a, and cylindrical lenses 32a to 32d arranged symmetrically around LEDs 31a to 31e. Cylindrical lenses 32a to 32d serve to distribute light emitted from LEDs 31a to 31e in the above-described prescribed directions at a prescribed luminous intensity.

The conventional bicycle taillight 30 requires five LEDs and four cylindrical lenses as shown in Fig. 14 to satisfy the prescribed regulation values. In other words, there was a need to employ a plurality of LEDs and cylindrical lenses so that the increase in cost was unavoidable.

From DE-A-42 24 061 a light emission device is known having a single luminance body having a top portion and a cylindrical portion. A light distribution member is provided surrounding the cylindrical portion of the luminance body for distributing light. The distributing member is provided for distributing light towards the two sides.

From EP-A-0 940 331 (cited under Article 54(3) EPC) a light emission device is known comprising a single high luminance body having a top portion and a cylindrical portion, comprising a first light distribution member on one side of the cylindrical portion and a second light distribution member. The light distribution members are provided for radiation to the two sides.

Thus, one object of the present invention is to provide a light emission device that satisfies a certain set of regulation values while allowing the cost reduction. Another object of the present invention is to provide a bicycle taillight that allows a reduction in cost.

The light emission device according to the present invention comprises a single high luminance LED body having a top portion and a cylindrical portion, a first light distribution member provided above said cylindrical portion of said LED body for distributing light upward and a second light distribution member provided on the other side of said cylindrical portion of said LED body for the distribution of light in the lateral directions, wherein said first light distribution member has reverse-conical shape toward said LED body.

The invention results in a higher degree of brightness at angles of 40° or greater.

Since light is distributed using a single high luminance LED body, which is interposed between the first and second light distribution members provided on one and the other sides of the cylindrical portion, light is not only emitted from the LED body but is also distributed in a first direction and a second direction. Thus, a desired degree of brightness in a prescribed direction is ensured only with the use of a single high luminance LED and without using a plurality of LEDs as in a conventional example. As a result, a light emission device that satisfies a certain set of regulation values while allowing the cost reduction can be provided.

Preferably, the first light distribution member has a reverse-conical shape toward the LED body. Since light is effectively reflected on a side surface having the reverse-conical shape, the light is efficiently distributed upward.

Preferably, the first light distribution member is asymmetrical to the second light distribution member. Since the first light distribution member and the second light distribution member are respectively formed to have a shape asymmetrical to the other, a desired luminous intensity in a desired direction can be achieved.

Preferably, the second light distribution member has a reverse V-shaped groove in a second direction. The reverse V-shaped groove in the second direction allows light to reflect upon a groove surface so that light is distributed in the lateral direction.

Preferably, the second light distribution member includes a third light distribution member, and the third light distribution member has a trough-shaped curved surface in the top direction.

Since the third light distribution member has the trough-shaped curved surface in the top direction, light reflects upon the curved surface so that the light in the forward direction is distributed.

More preferably, the first light distribution member and the second light distribution member are integrated. The integration of the first light distribution member and the second light distribution member allows easy manufacture and assembly.

In another aspect of the present invention, the above-described light emission device is utilized for a bicycle taillight. Since the light emission device having a single high luminance LED body and a plurality of light distribution members provided on either side of the cylindrical portion of the single high luminance LED body is utilized as a bicycle taillight, a bicycle taillight that satisfies a certain set of regulation values while allowing the cost reduction can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view illustrating an overall configuration a light emission device according to the present invention.
Figs. 2A and 2B are a front view and a side view of the light emission device according to the present invention.
Figs. 3A to 3C are diagrams illustrating the mounting relation between an upper light distribution member and an LED body.
Figs. 4A to 4D are diagrams illustrating the mounted condition of a lower light distribution member and the LED body.
Fig. 5 is a diagram representing an example of a performance of a high luminance LED.
Figs. 6A and 6B are a side cross sectional view of a bicycle taillight with a light emission device mounted thereon and a diagram representing a portion of the light emission device.
Figs. 7A and 7B are a cross sectional view of the bicycle taillight and a diagram illustrating the mounted condition of a light emission device and a control board of the light emission device.
Figs. 8 to 11 are diagrams illustrating the relations between the luminous intensity and the L and R angles of an LED body, a light emission device, and a bicycle taillight.
Fig. 12 is a diagram illustrating the regulation values of a bicycle taillight set forth in Germany.
Figs. 13A and 13B are diagrams relating to the description of the regulation values of a bicycle taillight.
Fig. 14 is a schematic view representing a configuration of a taillight that meets the requirement of the regulation values of a bicycle taillight conventionally set forth in Germany.

### DESCRIPTION OF THE PREFERRED EMBODIMENT

An example of an embodiment according to the present invention will be described below with reference to the drawings.

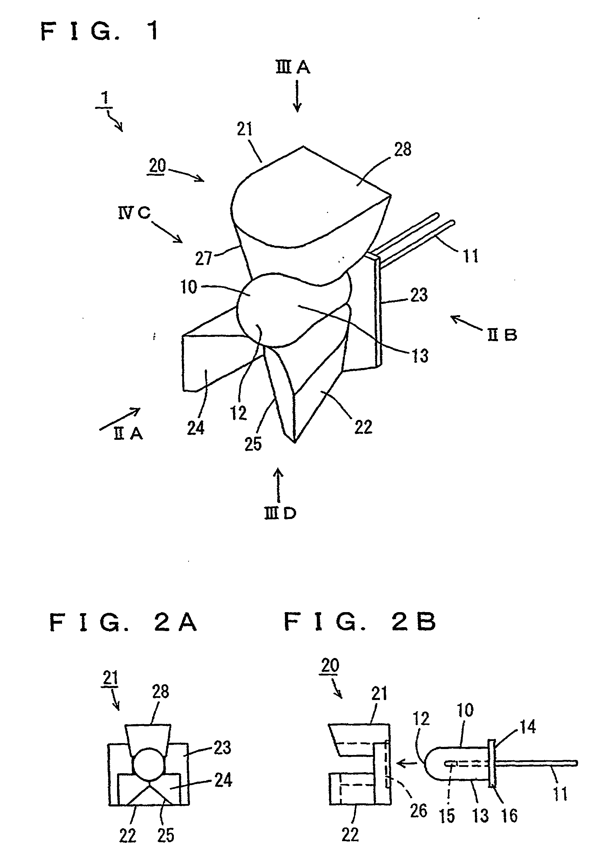

As seen in Fig. 1, a light emission device 1 includes a high luminance LED body 10 and a light distribution member 20 integrated with LED body 10 for receivably holding LED body 10. LED body 10 includes a top portion 12 having a hemispheric shape, and a cylindrical portion 13 connected to the top portion. Light distribution member 20 includes an upper light distribution member 21 provided in an upper portion of LED body 10, a lower light distribution member 22 provided in a lower portion of LED body 10, and an upper and lower light distribution member connecting portion 23 connecting upper light distribution member 21 and lower light distribution member 22.

LED body 10 further includes a planar bottom portion 14 having two electrodes 11 protruding therefrom. Upper light distribution member 21 has a reverse-conical shape toward top portion 12 side of LED body 10. Upper light distribution member 21 has a top planar surface 28 at the top edge, and a reverse-conical shaped side surface 27 is formed between top planar surface 28 and cylindrical portion 13 of LED body 10. Here, the vertical angle of the reverse-conical shape is about 14°.

Lower light distribution member 22 includes a trough-shaped curved surface 24 on top portion 12 side, directed from top portion 12 side toward bottom portion 14 side, and a reverse V-shaped groove 25 provided on cylindrical portion 13 side, extending toward cylindrical portion 13 of LED body 10 from the lower portion.

Fig. 2A is a front view of light distribution member 20 seen from IIA side of Fig. 1, and Fig. 2B is a side view of light distribution member 20 seen from the direction shown as IIB in Fig. 1. In Fig. 2B, LED body 10 is inserted into light distribution member 20 as shown by an arrow in the diagram such that a flange portion 16 provided at the bottom portion of LED body 10 is received by a flange receiving portion 26 provided in light distribution member 20, whereby LED body 10 and light distribution member 20 are integrated.

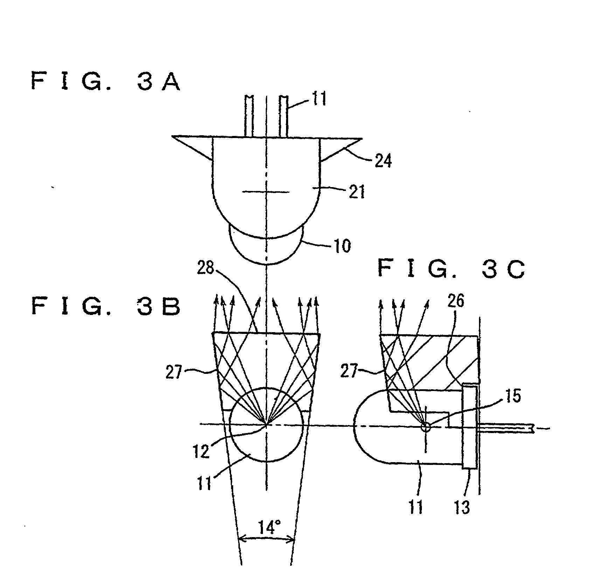

Figs. 3A to 3C are diagrams illustrating the mounted condition of LED body and upper light distribution member 21 of light distribution member 20. Fig. 3A is a plan view seen from the direction indicated by IIIA in Fig. 1, Fig. 3B is a front view seen from IIA side, and Fig. 3C is a side view seen from IIB side. Each straight line with an arrow end in the diagram indicates the path of light that travels from a light emitting diode 15 provided within LED body 10. As shown in Figs. 3B and 3C, the light from light emitting diode 15 reflects upon reverse-conical shaped side surface 27 of upper light distribution member 21, and is refracted by top planar surface 28 such that light is distributed upward.

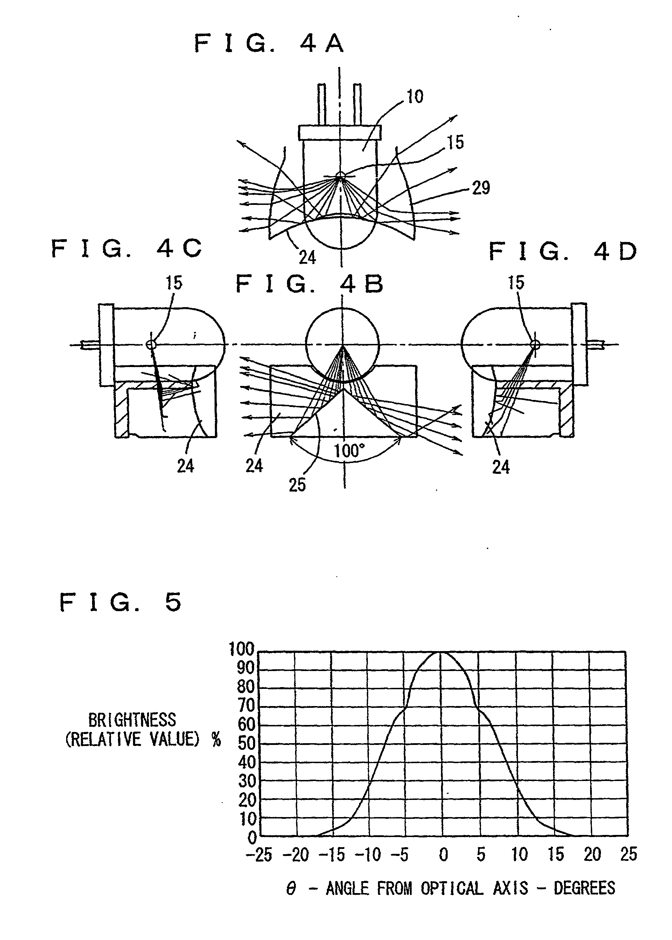

Figs. 4A to 4D are diagrams illustrating the positional relation between LED body 10 and lower light distribution member 22. Fig. 4A is a view seen from IIIA side of Fig. 1, Fig. 4B is a view seen from the direction of IIA in Fig. 1, Fig. 4C is a side view seen from the IVC side of Fig. 1, and Fig. 4D is a view seen from the IIB side. In Fig. 4A, the path of light travel from light emitting diode 15 is indicated by arrows as in Fig. 3. Light reflects upon trough-shaped curved surface 24 provided on top portion 12 side of lower light distribution member 22 and upon reverse V-shaped groove 25, and is refracted on a side curved surface 29 of lower light distribution member 22 and is diffused outward. A certain degree of luminous intensity is obtained by the light distribution shown in Fig. 4A even when each of the L and R angles is as wide as 110°. Here, the angle of the V-shape of reverse V-shaped groove 25 is 100°.

In Fig. 4A, the paths of light travel are shown reflecting from various positions of reverse V-shaped groove 25. Moreover, some light is reflected on trough-shaped curved surface 24 and reverse V-shaped groove 25, and refracted on side curved surface 29.

Fig. 5 is a diagram illustrating the relation between the brightness and the angle from an optical axis of high luminance LED body 10 employed in the present invention. As shown in Fig. 5, LED body 10 has a luminous intensity of 70% where the angle from the optical axis is within the range of ±5° and a luminous intensity of 10% where the angle from the optical axis is in the range of ±12.5°.

Further, the luminous intensity on the optical axis of the high luminance LED where the forward current equals 20 mA is at least 2000 mcd or above, and typically is about 3600 mcd. This indicates a brightness about three to four times greater than a conventional normal LED which is at 600 to 1000 mcd.

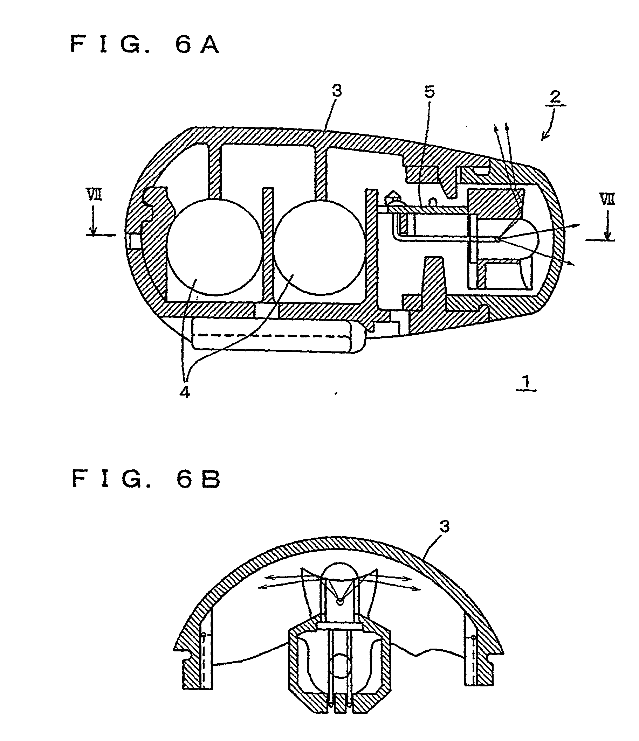

Now, a bicycle taillight 2 incorporating light emission device 1 will be described. Fig. 6A is a side cross sectional view of bicycle taillight 2, and Fig. 6B is a diagram representing a portion of light emission device 1 covered by a cover 3 of bicycle taillight 2. As seen in Fig. 6A, bicycle taillight 2 includes light emission device 1, a battery 4 for supplying power source to light emission device 1, a plastic case 3 for fixing battery 4 and light emission device 1 while covering the entire structure, and a substrate 5 for controlling light emission device 1. In Figs. 6A and 6B, a direction of light travel from light emission device 1 is indicated by a solid line with an arrow end.

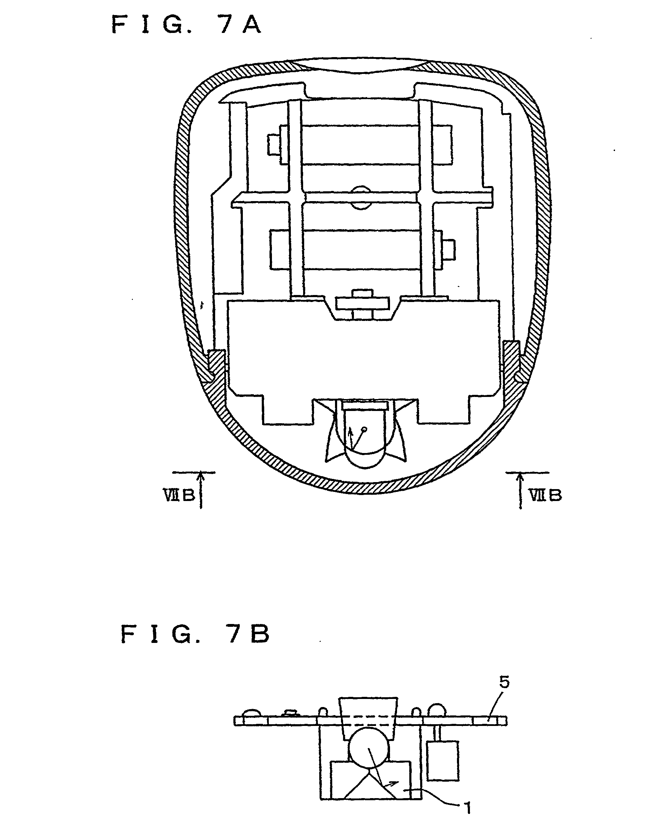

Fig. 7A is a cross sectional view of the portion indicated by VII in Fig. 6, and Fig. 7B is a diagram illustrating the positional relation between light emission device 1 and substrate 5 controlling light emission device 1 and is viewed from the direction of VIIB in Fig. 7A (case 3 is not shown).

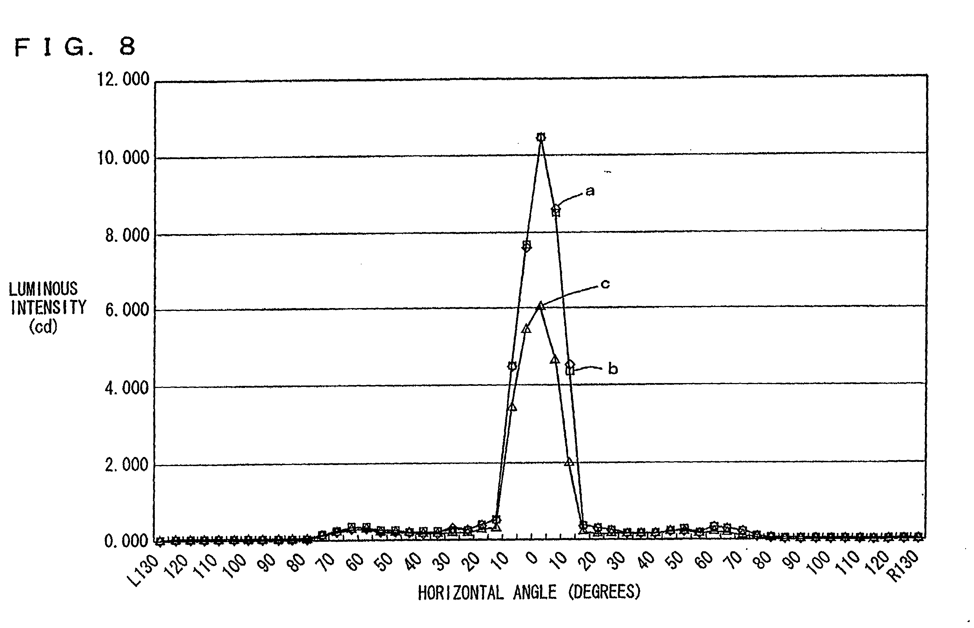

Fig. 8 is a diagram illustrating the light distribution characteristic of light emission device 1 and bicycle taillight 2 utilizing light emission device 1 according to the present invention. In the diagram, the horizontal angle indicates the respective L and R angles shown in Fig 13A, and the vertical axis indicates the luminous intensity in the unit of cd. In the diagram, "a" indicated by a diamond-shaped mark represents the luminous intensity in LED body 10, and "b" indicated by a square-shaped mark represents the luminous intensity where light distribution member 20 is mounted on LED body 10, and "c" indicated by a triangular mark represents the luminous intensity where light emission device 1 is received in case 3 as bicycle taillight 2. As is apparent from Fig. 8, a higher degree of brightness is obtained when LED body 10 is incorporated into light distribution member 20 as light emission device than when LED body 10 is by itself. On the other hand, when structured as bicycle taillight 2, the degree of brightness is seen to decrease significantly.

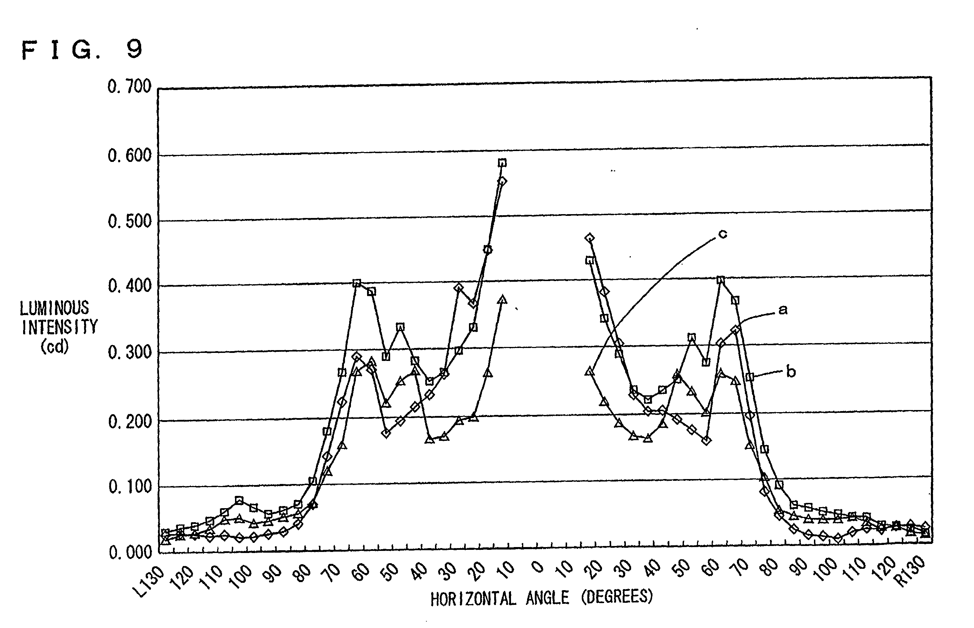

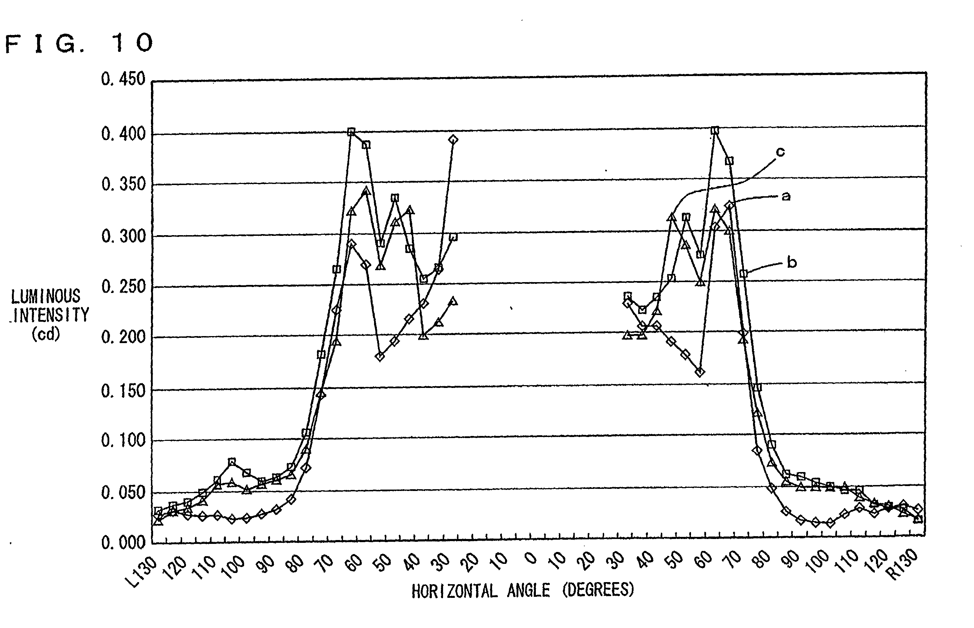

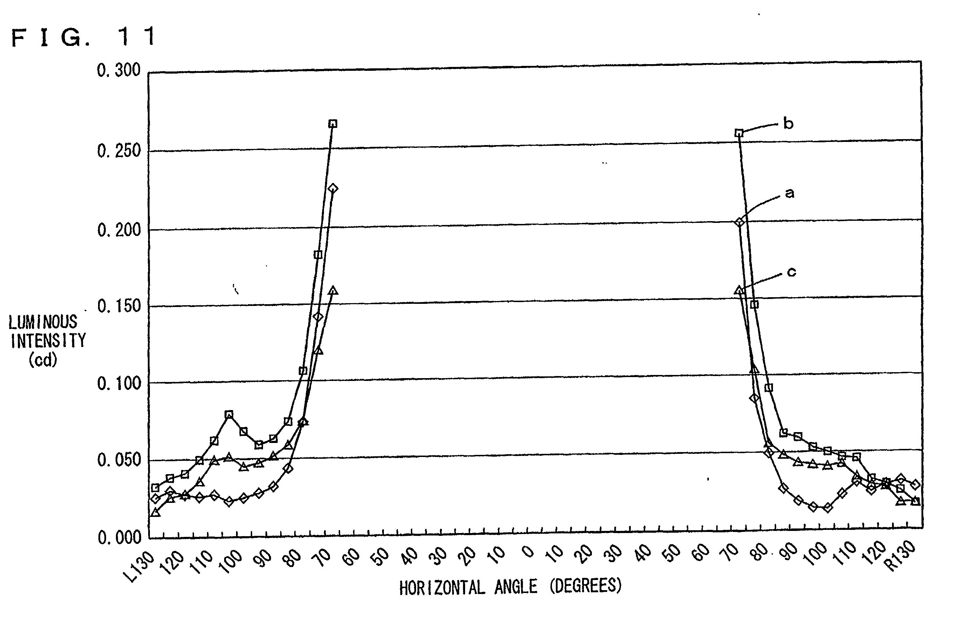

Figs. 9 to 11 are diagrams illustrating the L and R angles indicating luminous intensity that is greater than a prescribed value, respectively. Fig. 9 represents the case in which each of the L and R angle is 15° or greater, Fig. 10 represents the case in which each of the L and R angles is 30° or greater, and Fig. 11 represents the case in which each of the L and R angles is 70° or greater.

These values show that the German regulation values for a bicycle taillight shown in Fig. 5 are satisfied at respective angles L and R of 5°, 10°, and 45°.

As seen in Fig. 11, LED body 10 has a value of approximately 0.030 cd around the LR angle of 110°, and as light emission device 1, has a brightness of approximately 0.050 cd, and as bicycle taillight 2, has a brightness of approximately 0.040 cd. From these diagrams, the light emission device and the bicycle taillight according to the present invention is seen to satisfy the regulation values for a bicycle taillight set forth in Germany shown in Fig. 12.

## Claims

1. A light emission device (1), comprising:
a single high luminance LED body (10) having a top portion (12) and
a cylindrical portion (13) connected to the top portion (12);
a first light distribution member (21) provided above said cylindrical portion (13) of said LED body (10) for distributing light upward; and
a second light distribution member (22) provided on the other side of said cylindrical portion (13) of said LED body (10) for the distribution of light in the lateral directions,
wherein said first light distribution member (21) has a reverse-conical shape toward said LED body (10).

2. The light emission device (1) according to claim 1, wherein said first light distribution member (21) is asymmetrical to said second light distribution member (22).

3. The light emission device (1) according to claim 1 or 2, wherein said second distribution member (22) has a reverse V-shaped groove on said other side.

4. The light emission device (1) according *to* one of claims 1 to 3, wherein said second light distribution member (22) includes a third light distribution member (24), arid said third light distribution member (24) has a trough-shaped curved surface in a direction of said top portion (12).

5. The light emission device (1) according to one of claims 1 to 4, wherein said first light distribution member (21) and said second light distribution member (22) are integrated.

6. A bicycle taillight incorporating a light emission device according to one of claims 1 to 5.

## Patentansprüche

1. Eine lichtemittierende Einrichtung (1), die:
einen einzigen Hochluminanz-LED-Körper (10), der ein Kopfteil (12) und einen mit dem Kopfteil (12) verbundenen zylindrischen Abschnitt (13) aufweist;
einen ersten Lichtverteilungskörper (21), der oberhalb besagten zylindrischen Abschnitts (13) des besagten LED-Körpers (10) zum Verteilen von Licht nach oben vorgesehen ist; und
einen zweiten Lichtverteilungskörper (22), der auf der anderen Seite des besagten zylindrischen Abschnitts (13) des besagten LED-Körpers (10) für die Verteilung von Licht in die lateralen Richtungen vorgesehen ist,
umfaßt,
worin besagter erster Lichtverteilungskörper (21) eine umgekehrt-konische Form zu besagtem LED-Körper (10) hin aufweist.

2. Die lichtemittierende Einrichtung (1) gemäß Anspruch 1, worin besagter erster Lichtverteilungskörper (21) asymmetrisch zu besagtem zweiten Lichtverteilungskörper (22) ist.

3. Die lichtemittierende Einrichtung (1) gemäß Anspruch 1 oder 2, worin besagter zweiter Lichtverteilungskörper (22) eine umgekehrt V-förmige Kerbe auf besagter anderer Seite aufweist.

4. Die lichtemittierende Einrichtung (1) gemäß einem der Ansprüche 1 bis 3, worin besagter zweiter Lichtverteilungskörper (22) einen dritten Lichtverteilungskörper (24) beinhaltet und besagter dritter Lichtverteilungskörper (24) eine trogförmig gekrümmte Oberfläche in einer Richtung zu dem Kopfteil (12) aufweist.

5. Die lichtemittierende Einrichtung (1) gemäß einem der Ansprüche 1 bis 4, worin besagter erster Lichtverteilungskörper (21) und besagter zweiter Lichtverteilungskörper (22) integriert sind.

6. Ein Fahrradrücklicht, mit einer lichtemittierenden Einrichtung gemäß einem der Ansprüche 1 bis 5.

## Revendications

1. Dispositif émetteur de lumière (1), comprenant :
un corps (10) de LED unique à forte luminance possédant une partie de sommet (12) et une partie cylindrique (13) reliée à la partie de sommet (12) ;
un premier élément (21) de diffusion de lumière disposé au-dessus de ladite partie cylindrique (13) dudit corps (10) de LED dans le but de diffuser de la lumière vers le haut ; et
un deuxième élément (22) de diffusion de lumière disposé de l'autre côté de la partie cylindrique (13) dudit corps (10) de LED pour diffuser de la lumière dans les directions latérales, dans lequel ledit premier élément (21) de diffusion de lumière a une forme de cône inversé en direction dudit corps (10) de LED.

2. Dispositif émetteur de lumière (1) selon la revendication 1, dans lequel ledit premier élément (21) de diffusion de lumière est asymétrique par rapport audit deuxième élément (22) de diffusion de lumière.

3. Dispositif émetteur de lumière (1) selon la revendication 1 ou 2, dans lequel ledit deuxième élément (22) de diffusion de lumière comporte une rainure en forme de V inversé sur ledit autre côté.

4. Dispositif émetteur de lumière (1) selon l'une quelconque des revendications 1 à 3, dans lequel ledit deuxième élément (22) de diffusion de lumière comprend un troisième élément (24) de diffusion de lumière, et ledit troisième élément (24) de diffusion de lumière comporte une surface incurvée en forme d'auge en direction de ladite partie de sommet (12).

5. Dispositif émetteur de lumière (1) selon l'une quelconque des revendications 1 à 4, dans lequel ledit premier élément (21) de diffusion de lumière et ledit deuxième élément (22) de diffusion de lumière sont intégrés.

6. Feu arrière de bicyclette incorporant un dispositif émetteur de lumière selon l'une quelconque des revendications 1 à 5.
